Europäisches Patentamt

European Patent Office

Office européen des brevets

(19)

(11) Veröffentlichungsnummer : **0 463 012 B1**

## (12) EUROPÄISCHE PATENTSCHRIFT

(45) Veröffentlichungstag der Patentschrift :
21.07.93 Patentblatt 93/29

(51) Int. Cl.$^5$ : **C08G 12/12,** D21H 17/49,
**C08G 12/38,** C08G 12/14

(21) Anmeldenummer : 90904337.4

(22) Anmeldetag : 14.03.90

(86) Internationale Anmeldenummer :
PCT/EP90/00409

(87) Internationale Veröffentlichungsnummer :
WO 90/11308 04.10.90 Gazette 90/23

(54) KATIONISCHE HARNSTOFF-FORMALDEHYD-KONDENSATE, VERFAHREN ZU IHRER HERSTELLUNG UND IHRE VERWENDUNG IN DER PAPIERINDUSTRIE.

(30) Priorität : 18.03.89 DE 3909007

(43) Veröffentlichungstag der Anmeldung :
02.01.92 Patentblatt 92/01

(45) Bekanntmachung des Hinweises auf die
Patenterteilung :
21.07.93 Patentblatt 93/29

(84) Benannte Vertragsstaaten :
AT BE CH DE ES FR GB IT LI NL SE

(56) Entgegenhaltungen :
EP-A- 0 007 705
EP-A- 0 123 196
DE-A- 1 595 336
US-A- 2 698 787
US-A- 2 917 427

(73) Patentinhaber : **BASF Aktiengesellschaft
Carl-Bosch-Strasse 38
W-6700 Ludwigshafen (DE)**

(72) Erfinder : **FLORY, Klaus
Im Schilling 2
W-6906 Leimen (DE)**
Erfinder : **EISELE, Wolfgang
Niedererdstrasse 103
W-6700 Ludwigshafen (DE)**
Erfinder : **STANGE, Andreas
Kantstrasse 8
W-6800 Mannheim 1 (DE)**

EP 0 463 012 B1

**Beschreibung**

Die Erfindung betrifft kationische Harnstoff-Formaldehyd-Kondensate, ein Verfahren zu ihrer Herstellung und ihre Verwendung als Verfestigungsmittel bei der Herstellung von Papier.

Bei der Herstellung von Papier werden bekanntlich Harnstoff-Formaldehyd-Kondensationsprodukte als Naßverfestigungsmittel verwendet. Kationisch modifizierte Harnstoff-Formaldehyd-Kondensate, die durch Kondensieren von Harnstoff und Formaldehyd in Gegenwart von Aminen oder Polyaminen herstellbar sind, werden ebenfalls bei der Papierherstellung als Naßverfestiger verwendet. Sie haben gegenüber den nicht modifizierten Harnstoff-Formaldehyd-Kondensaten eine verbesserte Wirksamkeit. Auch Kondensationsprodukte aus Melamin, Harnstoff und Formaldehyd eignen sich für die Naßverfestigung von Papier.

Aus der EP-PS-0 123 196 ist ein Verfahren zur Herstellung von wasserlöslichen kationischen Harnstoff-Formaldehyd-Harzen bekannt, bei dem man Harnstoff und Formaldehyd im Molverhältnis 1:1,5 bis 3 in Gegenwart von Polyaminen kondensiert, wobei man die Mischung zunächst (a) bei pH-Werten von 8 bis 14 vorkondensiert, dann ansäuert und (b) bei pH-Werten von 1 bis 5 bis zur beginnenden Gelbildung kondensiert, (c) pro Mol des eingesetzten Harnstoffs 0,3 bis 1,5 Mol Formaldehyd zusetzt, (d) eine Nachkondensation durchführt und die Harzlösung anschließend neutralisiert. Als Polyamine werden dabei pro Mol Harnstoff im Endprodukt 5 bis 50 g Polyethylenimin, das 20 bis 15.000 Ethylenimin-Einheiten einpolymerisiert enthält, verwendet. Die so erhältlichen wasserlöslichen kationischen Harnstoff-Formaldehyd-Harze werden als Hilfsmittel bei der Herstellung von Papier zur Erhöhung der Trocken- und Naßfestigkeit des Papiers eingesetzt. Beim Trocknen der Papierbahnen, die diese Harze als Verfestiger enthalten, wird eine unerwünschte Abspaltung von Formaldehyd beobachtet. Die Formaldehyd-Abspaltung während des Trocknungsprozesses von Papier, das mit den eingangs erwähnten Harnstoff-Formaldehyd-Harzen als Naßfestmittel ausgerüstet ist, ist dagegen noch weitaus stärker als mit den Kondensationsprodukten der EP-PS 0 123 196.

US-A-26 98 787 betrifft die Herstellung von Harnstoff-Formaldehyd-Harzen aus mono Substituierten Harnstoffen, die durch Umsetzung von Harnstoff mit Polyalkylen polyaminen oder N- Hydroxyalkylpolyalkylenpolyaminen hergestellt sind.

Der vorliegenden Erfindung liegt die Aufgabe zugrunde, Harnstoff-Formaldehyd-Kondensate zur Verfügung zu stellen, die bei der Anwendung als Naßverfestigungsmittel für Papier bei der Trocknung des Papiers zu einer geringeren Formaldehyd-Emission Anlaß geben als die bisher hierfür verwendeten Kondensate auf Basis von Harnstoff und Formaldehyd.

Die Aufgabe wird erfindungsgemäß gelöst mit kationischen Harnstoff-Formaldehyd-Kondensaten, die erhältlich sind durch

a) Umsetzung von Harnstoff mit Triethanolamin im Molverhältnis 1 bis 6:1 bei Temperaturen von 130 bis 180°C unter Abspaltung von Ammoniak,

b) Methylolierung der in der Stufe (a) erhaltenen Umsetzungsprodukte in wäßrigem Medium im basischen pH-Bereich mit Formaldehyd,

c) Kondensieren der Methylolierungsprodukte in wäßrigem Medium bei pH-Werten von 0 bis 6 unter Bildung wasserlöslicher kationischer Harnstoff-Formaldehyd-Kondensate bis zur beginnenden Gelbildung und

d) Abstoppen der Kondensationsreaktion durch Einstellen des pH-Werts auf 6,2 bis 8 und gegebenenfalls Verdünnen des Reaktionsgemisches durch Zugabe von Wasser.

Eine Modifizierung der kationischen Harnstoff-Formaldehyd-Kondensate wird dadurch erreicht, daß man die Methylolierung der Stufe (b) in Gegenwart von 0,5 bis 5 Mol, bezogen auf 1 Mol Triethanolamin in Stufe (a), an Harnstoff, Ethylenharnstoff, Melamin, Dicyandiamid oder deren Mischungen durchführt. Die so erhältlichen kationischen Harnstoff-Formaldehyd-Kondensate werden als Verfestigungsmittel bei der Papierherstellung verwendet. Während des Trocknungsprozesses der Papiere, die diese Kondensate als Verfestiger enthalten, tritt gegenüber bekannten Verfestigungsmitteln auf Basis von gegebenenfalls modifizierten Harnstoff-Formaldehyd-Kondensaten eine verminderte Formaldehydemission ein.

Die erfindungsgemäßen kationischen Harnstoff-Formaldehyd-Kondensate werden in einer mehrstufigen Reaktion hergestellt. In der Stufe (a) setzt man zunächst Harnstoff mit Triethanolamin im Molverhältnis 1:1 bis 6:1, vorzugsweise 3:1 bis 4:1, bei Temperaturen von 130 bis 180, vorzugsweise 140 bis 160°C unter Abspaltung von Ammoniak um.

Die Kondensationsreaktion verläuft unter Abspaltung von Ammoniak aus dem eingesetzten Harnstoff, wobei sich Carbamte bilden. Die Umsetzung ist außerdem mit einer Erhöhung der Viskosität der Reaktionsmischung verbunden. Die Kondensation wird beispielsweise soweit geführt, daß das Reaktionsgemisch bei einer Temperatur von 150°C eine Viskosität von mindestens 300 mPas aufweist. Vorzugsweise wird die Umsetzung soweit durchgeführt, daß die Viskositäten der Reaktionsmischungen, jeweils bestimmt bei 150°C, 300 bis 3000 mPas betragen. Die so erhältlichen Umsetzungsprodukte können in Form eines Pulvers isoliert oder in Wasser

2

gelöst werden.

In der Verfahrensstufe (b) erfolgt die Methylolierung der in der Stufe (a) erhaltenen Umsetzungsprodukte. Die Methylolierung wird vorzugsweise in wäßriger Lösung im basischen pH-Bereich mit Formaldehyd durchgeführt. Die Konzentration der wäßrigen Lösung an Umsetzungsprodukten gemäß (a) und Formaldehyd beträgt 10 bis 80, vorzugsweise 40 bis 60 Gew.-%. Der pH-Wert dieser wäßrigen Lösungen wird auf Werte von 7,5 bis 14, vorzugsweise 8 bis 11 für die Methylolierung eingestellt. Die Methylolierung selbst erfolgt durch Zugabe von Formaldehyd, der entweder in Form einer wäßrigen Lösung, als Paraformaldehyd oder auch gasförmig in die Lösung des Umsetzungsprodukts (a) eingeleitet werden kann. Vorzugsweise verwendet man Formaldehyd in der in der Technik üblichen wäßrigen Lösung einer Konzentration von 37 bis 50 Gew.-%.

Die Methylolierung kann in Gegenwart von Modifizierungsmitteln, wie Harnstoff, Ethylenharnstoff, Melamin, Dicyandiamid und/oder Propylenharnstoff durchgeführt werden. Die Modifizierungsmittel können in Form einer wäßrigen Lösung zu der wäßrigen Lösung des in der Stufe (a) erhaltenen Umsetzungsprodukts oder auch als Pulver zugesetzt werden. Die Modifizierungshilfsmittel werden in einer Menge von 0,5 bis 5 Mol, bezogen auf 1 Mol des in Stufe (a) einkondensierten Alkanolamins eingesetzt. Die Methylolierung in der Verfahrensstufe (b) erfolgt üblicherweise bei Temperaturen von 50 bis 90°C. Die Methylolierung, die auch als Vorkondensation bezeichnet wird, ist in Abhängigkeit von der Temperatur nach etwa 10 Minuten bis zu 2 Stunden beendet. Danach erfolgt in der Verfahrensstufe (c) die Kondensation.

Zur Kondensation der methylolierten Produkte gemäß Verfahrensstufe (b) wird der pH-Wert der wäßrigen Lösung auf 0 bis 6, vorzugsweise 1 bis 5 eingestellt. Hierfür kann man sowohl Mineralsäuren als auch organische Säuren verwenden, z.B. Schwefelsäure, Phosphorsäure, Salzsäure, Ameisensäure, Essigsäure, Propionsäure, p-Toluolsulfonsäure, Benzolsulfonsäure, Amidosulfonsäure und Chloressigsäure. Selbstverständlich ist es auch möglich, Mischungen verschiedener Säuren zu nehmen. Die Kondensation in der Verfahrensstufe (c) wird bei 60 bis 100, vorzugsweise bei 70 bis 90°C durchgeführt. Hierbei bilden sich wasserlösliche kationische Harnstoff-Formaldehyd-Kondensate. Sie wird so weit geführt, bis eine Gelbildung zu beobachten ist, die daran zu erkennen ist, daß sich am Rührer - auch bei höheren Drehzahlen - keine Trombe mehr ausbildet, sondern das Reaktionsprodukt am Rührer hochsteigt. Für die Kondensationsreaktion benötigt man in Abhängigkeit von der Temperatur und vom pH-Wert 15 Minuten bis zu 3 Stunden, wobei hohen Temperaturen kurze Reaktionszeiten und hohen pH-Werten lange Kondensationszeiten zuzuordnen sind.

Sobald beim Kondensieren der Methylolierungsprodukte eine Gelbildung zu beobachten ist, erfolgt in der Reaktionsstufe (d) das Abstoppen der Kondensationsreaktion durch Einstellen des pH-Werts auf 6,2 bis 8, vorzugsweise 6,5 bis 7,5. um das Reaktionsgemisch auf Werte in dem angegebenen pH-Bereich zu neutralisieren, verwendet man beispielsweise Natronlauge, Kalilauge, Ammoniak, Amine, Soda, Kaliumcarbonat, Natriumhydrogencarbonat oder Gemische aus zwei oder mehreren Basen. Bevorzugt kommt Natronlauge zum Einsatz. Das Reaktionsgemisch kann vor dem Abstoppen oder auch erst nach Zugabe einer Base zum Einstellen des pH-Werts durch Zugabe von Wasser verdünnt werden. Man erhält auf diese Weise wäßrige Lösungen mit einer Konzentration an kationischen Harnstoff-Formaldehyd-Kondensaten von 5 bis 50 Gew.-%. Vorzugsweise wird die Konzentration der Kondensate so eingestellt, daß 8 bis 40 gew.%ige wäßrige Lösungen vorliegen. Selbstverständlich ist es auch möglich, die kationischen Harnstoff-Formaldehyd-Harze aus den wäßrigen Lösungen nach dem Abstoppen der Kondensationsreaktion durch Verdampfen des Wassers in fester Form zu isolieren.

Die so erhältlichen kationischen Harnstoff-Formaldehyd-Kondensate werden vorzugsweise in Form der wäßrigen Lösung als Verfestigungsmittel bei der Papierherstellung verwendet. Dafür benötigt man Mengen von 0,1 bis 10 Gew.-% der Kondensate, bezogen auf die trockenen Papierfasern. Die erfindungsgemäßen kationischen Harnstoff-Formaldehyd-Kondensate können bei der Herstellung von allen bekannten Papier-, Karton- und Pappenqualitäten verwendet werden, z.B. Schreib-, Druck- und Verpackungspapieren. Die Papiere können aus einer Vielzahl verschiedenartiger Fasermaterialien hergestellt werden, beispielsweise aus Sulfit- oder aus Sulfat-Zellstoff in gebleichtem oder ungebleichtem Zustand, Holzschliff, Altpapier, thermomechanischem Stoff (TMP) und chemothermomechanischem Stoff (CTMP).

Die kationischen Kondensate können dabei sowohl dem Papierstoff vor der Blattbildung zugesetzt werden als auch auf die Oberfläche eines Papierblatts, z.B. in der Leimpresse, aufgetragen werden. Nach dem Trocknen des Papiers erhält man in allen Fällen Papiere mit verbesserten Festigkeitswerten. Vorzugsweise werden die kationischen Harnstoff-Formaldehyd-Kondensate der Papierstoff-Suspension in Mengen von 0,5 bis 5 Gew.-%, bezogen auf trockenen Papierstoff, zugesetzt. Der pH-Wert der Stoffsuspension liegt zwischen 4,0 und 10, vorzugsweise zwischen 6,0 und 8,5. Die kationischen Kondensate können sowohl bei der Herstellung von Rohpapier für Papiere mit geringem Flächengewicht (LWC-Papieren) sowie für Pappe oder Karton verwendet werden. Das Flächengewicht der Papiere beträgt zwischen 30 und 200, vorzugsweise 35 und 150 g/m², während es bei Karton bis zu 600 g/m² betragen kann.

Die in den folgenden Beispielen angegebenen Teile sind Gewichtsteile, die Angaben in Prozent beziehen sich auf das Gewicht.

3

Beispiel 1

15 Teile Triethanolamin und 27 Teile Harnstoff werden unter Rühren in einer Stickstoffatmosphäre auf eine Temperatur von 160°C erhitzt und so lange auf dieser Temperatur gehalten, bis 6,5 Teile Ammoniak abgespalten sind. Danach wird das Reaktionsgemisch auf eine Temperatur von 100°C abgekühlt und mit 17 Teilen Wasser versetzt.

Die wäßrige Lösung wird anschließend mit 42 Teilen 40 %iger wäßriger Formaldehydlösung und 10 Teilen Harnstoff versetzt und 30 Minuten bei 60°C methyloliert. Dann setzt man soviel Ameisensäure zu, daß das Reaktionsgemisch einen pH-Wert von 5,0 hat, erhitzt es auf 80°C und kondensiert es bei dieser Temperatur so lange, bis die ursprünglich vorhandene Thrombe am Rührer verschwunden ist. Dann setzt man 100 Teile Wasser zu und fügt soviel Natronlauge zu, bis der pH-Wert des Reaktionsgemisches 7,0 beträgt. Man erhält eine ca. 30 % Feststoffe enthaltende wäßrige Lösung eines kationischen Harnstoff-Formaldehyd-Kondensats. Die wäßrige Lösung des Kondensates ist beliebig mit Wasser verdünnbar.

Vergleichsbeispiel 1 gemäß EP-B-0 123 196

565 Teile (7,5 Mol) Formaldehyd in Form einer 40 %igen wäßrigen Lösung, 220 Teile (3,7 Mol) Harnstoff und 190 Teile Wasser wurden mit 50 Teilen einer 50 %igen wäßrigen Lösung von Polyethylenimin, das 35 Ethylenimineinheiten einpolymerisiert enthielt, gemischt und unter Rühren auf eine Temperatur von 70°C erwärmt. Nachdem die Mischung 30 Minuten bei dieser Temperatur gerührt wurde, stellte man durch Zugabe von Ameisensäure einen pH-Wert von 4,3 ein. Bei diesem pH-Wert und der Temperatur von 70°C wurde das Reaktionsgemisch bis zu beginnenden Gelbildung kondensiert. Die Kondensationsdauer betrug 2 Stunden. Im Anschluß an diese Hauptkondensation wurde ein Gemisch aus 151 Teilen (2,0 Mol) Formaldehyd in Form einer 50 %igen wäßrigen Lösung, 4 Teile Ethylendiamin, 30 Teile Wasser und 50 Teile Methanol zugesetzt und mit 20 %iger wäßriger Sodalösung ein pH-Wert von 5,8 eingestellt. Das Reaktionsgemisch wurde 1 Stunde bei 70°C nachkondensiert und anschließend ein pH-Wert von 6,2 eingestellt. Man erhielt eine ca. 35 % Feststoffe enthaltende wäßrige Lösung eines mit Polyethylenimin modifizierten Harnstoff-Formaldehyd-Kondensats.

Vergleichsharz 2

Gemäß Beispiel 1 der DE-PS 22 41 713 wurden in einem Rührbehälter pro Mol Melamin 3,2 Mole 25 %iger Formaldehyd vorgelegt und nach Einfüllen des Melamins innerhalb von 30 Min. gleichmäßig auf 70°C erwärmt, wobei sich im pH-Bereich von 6 bis 7 eine klare Lösung bildete.

Nach einer Stunde Rühren bei dieser Temperatur wurden unter wirksamer Kühlung 6,8 Mole 22 %igen Formaldehyd zugefügt. Nach ca. 40 Min. war eine Temperatur von 30°C erreicht. Bei dieser Temperatur wurden 0,09 Mole konzentrierte Salzlösung und 0,25 Mole 89 % Phosphorsäure zugesetzt und die Harzlösung mit 52 Mole Wasser verdünnt.

Beispiel 2

Anwendung des kationischen Kondensats gemäß Beispiel 1 als Verfestigungsmittel für Papier

Auf einer Versuchspapiermaschine mit einer Arbeitsbreite von 65 cm wurde bei einer Produktionsgeschwindigkeit von 60 m/min ein Papier aus 50 % gebleichtem Fichtensulfitzellstoff und 50 % gebleichtem Buchensulfitzellstoff mit einer Flächenmasse von 70 g/m² hergestellt. Der pH-Wert der Stoffsuspension wurde durch Zugabe von 2 % Aluminiumsulfat (berechnet auf trockene Fasern) und Schwefelsäure auf 4,5 eingestellt. Der Mahlgrad lag bei 30° Schopper-Riegler (°SR). Anhand dieses Stoffmodells wurde jeweils die Wirksamkeit des kationischen Kondensats gemäß Beispiel 1 und die der Vergleichsharze 1 und 2 geprüft. Der Zusatz der Verfestigungsmittel erfolgte jeweils im Dickstoff.

Von dem so hergestellten Papier wurde die Trockenreißlänge gemäß DIN 53 112, Blatt 1 und die Naßreißlänge gemäß DIN 53 112, Blatt 2, bestimmt. Die in der Tabelle angegebenen Werte sind Mittelwerte aus Längsund Querrichtung des Papiers zur Papiermaschine.

Außerdem wurde die Formaldehyd-Emission aus der Papierbahn in der ersten Absaughaube der ersten Trockengruppe (I) und der zweiten Trockengruppe (II) der Versuchspapiermaschine bestimmt.

Zunächst wurde aus dem oben beschriebenen Stoffmodell ein Papier hergestellt, indem man auf den Zusatz eines Naßfestmittels verzichtete. Dann setzte man jeweils das kationische Kondensat gemäß Beispiel 1 und danach die Vergleichsharze 1 und 2 als Verfestigungsmittel ein. Die Zusatzmengen sowie die damit erhaltenen Ergebnisse sind aus der Tabelle ersichtlich.

BASF Aktiengesellschaft

890191

8

Tabelle

| Bei-spiel | Vergleichs-beispiel | Zuatz | Trockenreiß-länge (m) | Naßreiß-länge (m) ab Maschine | Naßreiß-länge (m) nach Papier-alterung: 5 min 130°C | Formaldehyd-Emission (mg/m$^3$) in Trocken-gruppe | |
|---|---|---|---|---|---|---|---|
| | | | | | | I | II |
| | 1 | ohne Zusatz | 2912 | 178 | 195 | 0 | 0 |
| 2 | | 2 % Harz, berechnet fest gemäß Beispiel 1 | 3743 | 1151 | 1657 | 0,37 | 0,24 |
| | 2 | 2 % Vergleichsharz 1 berechnet fest | 3708 | 954 | 1450 | 0,7 | 0,61 |
| | 3 | 2 % Vergleichsharz 2 berechnet fest | 4206 | 1576 | 1731 | 1,9 | 5,0 |

EP 0 463 012 B1

**Patentansprüche**

1. Kationische Harnstoff-Formaldehyd-Kondensate, dadurch gekennzeichnet, daß sie erhältlich sind durch
   a) Umsetzung von Harnstoff mit Triethanolamin im Molververhältnis 1 bis 6:1 bei Temperaturen von 130 bis 180°C unter Abspaltung von Ammoniak,
   b) Methylolierung der in der Stufe (a) erhaltenen Umsetzungsprodukte in wäßrigem Medium im basischen pH-Bereich mit Formaldehyd,
   c) Kondensieren der Methylolierungsprodukte in wäßrigem Medium bei pH-Werten von 0 bis 6 unter Bildung wasserlöslicher kationischer Harnstoff-Formaldehyd-Kondensate bis zur beginnenden Gelbildung und
   d) Abstoppen der Kondensationsreaktion durch Einstellen des pH-Werts auf 6,2 bis 8 und gegebenenfalls Verdünnen des Reaktionsgemisches durch Zugabe von Wasser.

2. Kationische Harnstoff-Formaldehyd-Kondensate nach Anspruch 1, dadurch gekennzeichnet, daß die Methylolierung der Stufe (b) zusätzlich in Gegenwart von 0,5 bis 5 Mol, bezogen auf 1 Mol Alkanolamin in Stufe (a), an Harnstoff, Ethylenharnstoff, Melamin, Dicyandiamid oder deren Mischungen durchgeführt wird.

3. Verfahren zur Herstellung der kationischen Harnstoff-Formaldehyd-Kondensate nach Anspruch 1 oder 2, dadurch gekennzeichnet, daß man
   (a) Harnstoff mit Triethanolamin im Molverhältnis 1 bis 6:1 bei Temperaturen von 130 bis 180°C unter Abspaltung von Ammoniak umsetzt,
   (b) die in der Stufe (a) erhaltenen Umsetzungsprodukte in wäßrigem Medium im basischen pH-Bereich mit Formaldehyd gegebenenfalls in Gegenwart von 0,5 bis 5 Mol, bezogen auf 1 Mol in Stufe (a) eingesetztes Alkanolamin, an Harnstoff, Ethylenharnstoff, Melamin, Dicyandiamid oder deren Mischungen methyloliert,
   (c) die Methylolierungsprodukte in wäßrigem Medium bei pH-Werten von 0 bis 6 unter Bildung wasserlöslicher kationischer Harnstoff-Formaldehyd-Kondensate bis zur beginnenden Gelbildung kondensiert und
   (d) die Kondensationsreaktion durch Einstellen des pH-Werts des Reaktionsgemisches auf 6,2 bis 8 stoppt und das Reaktionsgemisch gegebenenfalls durch Zugabe von Wasser verdünnt.

4. Verwendung der kationischen Harnstoff-Formaldehyd-Kondensate nach Anspruch 1 oder 2 als Verfestigungsmittel bei der Papierherstellung.

5. Verwendung nach Anspruch 4, dadurch gekennzeichnet, daß die kationischen Harnstoff-Formaldehyd-Kondensate in Mengen von 0,1 bis 10 Gew.-%, bezogen auf trockene Fasern, eingesetzt werden.

**Claims**

1. A cationic urea-formaldehyde condensate, obtainable by
   a) reacting urea with triethanolamine in a molar ratio of from 1:1 to 6:1 at from 130 to 180°C with elimination of ammonia,
   b) methylolating the reaction product of stage (a) with formaldehyde in an aqueous medium at a basic pH,
   c) condensing the methylolation product in an aqueous medium at pH 0-6 with formation of a water-soluble cationic urea-formaldehyde condensate until the onset of gelling, and
   d) terminating the condensation reaction by adjusting the pH to 6.2-8 and optionally diluting the reaction mixture with water.

2. A cationic urea-formaldehyde condensate as claimed in claim 1, wherein the methylolation of stage (b) is carried out in the additional presence of from 0.5 to 5 mol, based on 1 mol of alkanolamine in stage (a), of urea, ethyleneurea, melamine, dicyandiamide or a mixture thereof.

3. A process for preparing a cationic urea-formaldehyde condensate as claimed in claim 1 or 2, which comprises

(a) reacting urea with triethanolamine in a molar ratio of from 1:1 to 6:1 at from 130 to 180°C with elimination of ammonia,

(b) methylolating the reaction product of stage (a) with formaldehyde in an aqueous medium at a basic pH in the presence or absence of from 0.5 to 5 mol, based on 1 mol of alkanolamine used in stage (a), of urea, ethyleneurea, melamine, dicyandiamide or a mixture thereof,

(c) condensing the methylolation product in an aqueous medium at pH 0-6 with formation of a water-soluble cationic urea-formaldehyde condensate until the onset of gelling, and

d) terminating the condensation reaction by adjusting the pH to 6.2-8 and optionally diluting the reaction mixture with water.

4. The use of a cationic urea-formaldehyde condensate as claimed in claim 1 or 2 as a strength enhancer in papermaking.

5. A use as claimed in claim 4, wherein the cationic urea-formaldehyde condensate is used in an amount of from 0.1 to 10% by weight, based on dry fiber.


**Revendications**

1. Produits de condensation de l'urée et du formaldéhyde, cationiques, caractérisés en ce que l'on peut les obtenir par :

(a) la réaction de l'urée avec la triéthanolamine dans le rapport molaire de 1 à 6:1 à des températures de 130 à 180°C, avec séparation d'ammoniac,

(b) la méthylolation des produits de réaction obtenus au cours de l'étape (a) en milieu aqueux et dans une plage de pH basiques avec le formaldéhyde,

(c) la condensation des produits de la méthylolation en milieu aqueux à des valeurs de pH de 0 à 6, sous formation de produits de condensation de l'urée et du formaldéhyde, cationiques, solubles dans l'eau, jusqu'à formation de gel débutante, et

(d) l'arrêt de la réaction de condensation par réglage de la valeur du pH à 6,2-8 et la dilution éventuelle du mélange réactionnel par l'addition d'eau.

2. Produits de condensation de l'urée et du formaldéhyde, cationiques, selon la revendication 1, caractérisés en ce que l'on entreprend complémentairement la méthylolation de l'étape (b) en présence de 0,5 à 5 moles, par rapport une 1 mole de l'alcanolamine dans l'étape (a), d'urée, d'éthylèneurée, de mélamine, de dicyandiamide ou de leurs mélanges.

3. Procédé de préparation des produits de condensation de l'urée et du formaldéhyde, cationiques, selon la revendication 1 ou 2, caractérisé en ce que :

(a) on fait réagir l'urée avec la triéthanolamine dans le rapport molaire de 1 à 6:1 à des températures de 130 à 180°C avec séparation d'ammoniac,

(b) on procède à la méthylolation des produits de réaction obtenus dans l'étape (a) en milieu aqueux et dans une plage de pH alcalins avec le formaldéhyde, éventuellement en présence de 0,5 à 5 moles, par rapport à 1 mole de l'alcanolamine mise en oeuvre au cours de l'étape (a), d'urée, d'éthylèneurée, de mélamine, de dicyandiamide ou de leurs mélanges,

(c) on condense les produits de la méthylolation en milieu aqueux à des valeurs de pH de 0 à 6, sous formation de produits de condensation de l'urée et du formaldéhyde, cationiques, solubles dans l'eau, jusqu'à formation de gel débutante, et

(d) on arrête la réaction de condensation par le réglage de la valeur du pH du mélange réactionnel à 6,2-8 et on dilue éventuellement le mélange de réaction par l'addition d'eau.

4. Utilisation des produits de condensation de l'urée et du formaldéhyde, cationiques, selon la revendication 1 ou 2, à titre d'agents de renforcement au cours de la fabrication du papier.

5. Utilisation suivant la revendication 4, caractérisée en ce que l'on utilise les produits de condensation de l'urée et du formaldéhyde, cationiques, en proportions de 0,1 à 10% en poids, par rapport aux fibres sèches.